# EUROPÄISCHE PATENTANMELDUNG

(11) **EP 1 692 982 A2**
(43) Veröffentlichungstag der Anmeldung: **23.08.2006**
(21) Anmeldenummer: 06405054.5
(22) Anmeldetag: 06.02.2006
(51) Int. Cl.: A47F 5/08, A47F 5/10, A47F 5/13

(54) **Profil für ein Gestell zur Warenpräsentation und mit dem Profil aufgebautes Gestell**

(30) Priorität: 19.02.2005 DE 202005002739 U
(71) Anmelder: Visplay International AG, 4132 Muttenz (CH)
(72) Erfinder: Walter, Herbert, 79379 Müllheim (DE)
(74) Vertreter: Ullrich, Gerhard

(57) **Zusammenfassung**

Bei dem zum vertikalen Anordnen in einem Präsentationsgestell konzipierten Profil (**1**) mündet auf zwei einander gegenüber liegenden ersten Aussenflächen (**11,13**) jeweils der Zugang **(150)** einer Frontnut **(15),** die jeweils zu einer Innenwandung **(17)** mit einem darin vorhandenen vertikalen Raster aus alternierend angeordneten Stegen **(170)** und Schlitzen **(171)** führt, in die sich herkömmliche Konsolen **(30)** von Tragarmen **(3)** einhängen lassen. Die beiden zueinander gegenüber liegenden Innenwandungen **(17)** schliessen zwischen sich eine vorzugsweise gemeinsame Aussparung **(18)** ein, die Platz für hineinragende Nasen, auch auf gleicher Höhe in beide Frontnuten **(15)** eingehängter Konsolen **(30)** bietet. Auf zwei einander gegenüber liegenden zweiten Aussenflächen **(12,14)** mündet jeweils der Zugang **(160)** einer Seitennut **(16)** mit einem hinterschnittenen Innenraum **(161),** die zum Befestigen von Querelementen **(2,8)** in beliebiger Höhe nutzbar sind.

## Beschreibung

### Anwendungsgebiet der Erfindung

Die vorliegende Erfindung betrifft ein Profil für die Vertikalstützen eines stationären oder mobilen Gestells zur Warenpräsentation. Das Profil weist Schlitzraster auf, in die sich herkömmliche Konsolen von Tragarmen, einhängen lassen. An den Tragarmen können Artikel direkt aufgehängt werden oder die Tragarme stützen Ablagen. Die Erfindung umfasst ferner die zwei wesentlichen Typen mit dem Profil aufgebauter Gestelle.

### Stand der Technik

Aus der DE 201 00 181 U1 und DE 20 2004 002 701 U1 sind profilierte Vertikalstützen mit einem Schlitzraster zum Aufbau von Präsentationsgestellen bekannt. In errichteten Gestellen werden diese Profile mit Paneelelementen verkleidet, so dass nur mehr die Frontkanten mit dem Einhängeschlitz sichtbar bleiben.

### Aufgabe der Erfindung

Angesichts des erhöhten Montageaufwands bei den bisherigen Profilen und ihrer begrenzten Einsetzbarkeit, liegt der Erfindung die Aufgabe zugrunde, ein weiter entwickeltes Profil mit zweiseitiger Bestückbarkeit vorzuschlagen und dabei auf anzufügende Paneele verzichten zu können. Eine weitere Aufgabe besteht darin, ein stationäres und ein mobiles Gestell zur Warenpräsentation, die mit dem zu schaffenden Profil aufgebaut sind, vorzuschlagen.

### Übersicht über die Erfindung

Bei dem zum vertikalen Anordnen in einem Präsentationsgestell konzipierten Profil mündet auf zwei einander gegenüber liegenden ersten Aussenflächen jeweils der Zugang einer Frontnut, die jeweils zu einer Innenwandung mit einem darin vorhandenen vertikalen Raster aus alternierend angeordneten Stegen und Schlitzen führt, in die sich herkömmliche Konsolen von Tragarmen einhängen lassen. Die beiden zueinander gegenüber liegenden Innenwandungen schliessen zwischen sich eine vorzugsweise gemeinsame Aussparung ein, die Platz für hineinragende Nasen, auch auf gleicher Höhe in beide Frontnuten eingehängter Konsolen bietet. Auf zwei einander gegenüber liegenden zweiten Aussenflächen mündet jeweils der Zugang einer Seitennut mit einem hinterschnittenen Innenraum, die zum Befestigen von Querelementen in beliebiger Höhe nutzbar sind.

Nachfolgend werden spezielle Ausführungsformen der Erfindung definiert: Das Profil ist ein Hohlprofil mit rechteckigem Querschnitt, und die ersten Aussenflächen mit den Frontnuten sind vorzugsweise die Schmalseiten, während die zweiten Aussenflächen mit den Seitennuten vorzugsweise die Breitseiten sind. Die Seitennuten weisen eine T-förmige Geometrie auf. Die Querelemente sind Verbindungsstreben und/oder Flächenfüllelemente, die zwischen benachbart aufgestellten Profilen einsetzbar sind. Die Frontnuten erweitern sich hinter dem Zugang zunächst innerhalb des Profils zu einem Innenraum und haben vor der Innenwandung eine Verengung. Die Spaltbreite des Zugangs und der Schlitze ist im Verhältnis zur Plattendicke der Konsole bei einer Variante des Profils so bemessen, dass ein leichtgängiges Einhängen einer Konsole in die Frontnut und zugleich ein möglichst spielfreier Sitz erzielt wird. Bei einer alternativen Profilvariante ist die Spaltbreite des Zugangs und der Schlitze so dimensioniert, dass ein leichtgängiges Einhängen von zwei Konsolen nebeneinander in eine verbreiterte Frontnut und zugleich ein möglichst spielfreier Sitz erzielt wird. Die Konsolen gehen jeweils in ein Stangenteil über und bilden zusammen einen Tragarm, von dem sich ein Querholm zu einem weiteren solchen Tragarm überbrückend erstrecken kann und somit einen Rahmen ergibt, dessen Konsolen zum Einhängen in benachbart aufgestellte Profile bestimmt sind. Das Profil weist zumindest einen axialen Kanal auf, der an den Profilenden als Schraubkanal oder zur selbsthemmenden Aufnahme eines Endstücks nutzbar ist.

Beidseits der beiden Innenräume ist je ein axialer Kanal mit Öffnung zum Innenraum vorgesehen. In die Aussparung ist eine Abschirmung eingesetzt, um den Durchblick durch die zwei in den Innenwandungen kongruent liegenden Raster zu verhindern. Die Abschirmung ist vorzugsweise ein axial in die Aussparung eingeschobenes Profil von z.B. H-förmigem Querschnitt und besteht aus Kunststoff mit Seitenstreben und einer Querwandung. Die Seitenstreben kommen an den Wandflanken der Aussparung zu liegen, während die Querwandung die Abschirmung durchtretenden Lichts bewirkt. Durch die Abschirmung verbleibt von der Aussparung ein zweigeteilter, zentrischer Innenraum ausreichender Grösse für die Aufnahme der hineinragenden Nasen eingehängter Konsolen. Das Profil ist im Aluminium-Strangguss hergestellt. Die nach aussen Licht reflektierenden Flächen innerhalb der Innenräume sind mit einem Licht absorbierenden Mittel, z.B. einem Farbauftrag, versehen.

Nachstehend erfolgen Angaben zu mit dem erfindungsgemässen Profil errichteten Gestellen: Beim Gestell stationärer Art sind zwei oder mehr Vertikalstützen aus dem Profil zueinander beabstandet, vorzugsweise in einer vertikalen Ebene, aufgestellt, wobei Frontnuten in den Raum gerichtet sind. Die Vertikalstützen sind mittels Haltern an einer rückseitigen Tragstruktur, z.B. einer Rückwand, befestigt. Zwischen benachbart stehenden Vertikalstützen weist das Gestell stabilisierende Verbindungsstreben auf, die in Seitennuten lösbar befestigt sind. Zwischen benachbart stehende Vertikalstützen können Flächenfüllelemente zur Hintergrundabdeckung und/oder Dekoration und/oder Werbung in zueinander gewandte Seitennuten eingeschoben werden. Die vom Raum zugänglichen Frontnuten sind entsprechend der Aufgabe des Gestells mit Konsolen bestückt, die zu verschiedenen konfigurierten Tragarmen gehören, welche direkt als solche nutzbar sind oder Ablagen stützen. Die Verbindungsstreben haben an ihren Enden auf Klemmung beruhende Befestigungsmittel, die sich in die Seitennuten eingreifend, an beliebiger Höhenposition lösbar arretieren lassen.

Beim Gestell mobiler Art sind zwei oder mehr Vertikalstützen aus dem Profil zueinander beabstandet, in einer vertikalen Ebene, mit ihren unteren Enden auf der Oberseite eines Balkens mit Frontnuten in den Raum gerichtet, fixiert. Seitlich des Balkens sind paarweise gegenüberstehend Ausleger angeordnet, die Bodenelemente, z.B. Rollen, haben. Die vom Raum zugänglichen Frontnuten sind entsprechend der Aufgabe des Gestells mit Konsolen bestückt, die zu verschiedenen konfigurierten Tragarmen gehören, welche direkt als solche nutzbar sind oder Ablagen stützen. Zwischen benachbart stehenden Vertikalstützen können Flächenfüllelemente zur Auskleidung, Hintergrundabdeckung und/oder Dekoration und/oder Werbung in zueinander gewandte Seitennuten eingeschoben werden.

Der Balken weist auf seiner Oberseite zwei längslaufende Basisnuten, an den Flanken jeweils eine Seitennut und an der Unterseite eine Bodennut auf. Zur Verbindung zwischen den unteren Enden der Vertikalstützen und dem Balken ist jeweils eine Adapterplatte, mit Befestigungsmitteln einerseits mit dem unteren Stützenende und andererseits mit der Balkenoberseite verbunden. Als Befestigungsmittel dienen in die Basisnuten eingesetzte Nutensteine, von unterhalb der Adapterplatte in die Kanäle des unteren Stützenendes eingreifende Schrauben und von oben durch die Adapterplatte in die Nutensteine eingreifende Schrauben. Die Ausleger sind jeweils an einer Seitennut des Balkens befestigt, z.B. ebenfalls unter Verwendung von Nutensteinen und Schrauben. Zwischen benachbart stehenden Vertikalstützen weist das Gestell stabilisierende Verbindungsstreben auf, die in Seitennuten lösbar befestigt sind. Oben auf den Vertikalstützen kann eine überbrückende Deckleiste angebracht sein, die eine mittlere, nach oben offene, längslaufende Nut besitzt, um darin einen einsteckbaren Aufsatz aufzunehmen. Die Verbindungsstreben haben an ihren Enden auf Klemmung beruhende Befestigungsmittel, die sich in die Seitennuten eingreifend an beliebiger Höhenposition lösbar arretieren lassen.

### Kurzbeschreibung der beigefügten Zeichnungen

Es zeigen:
- Figur 1A: ein aus mehreren Vertikalstützen des erfindungsgemässen Profils *erster Variante* errichtetes stationäres Präsentationsgestell, bestückt mit verschiedenen Warenträgern, in Perspektivansicht;
- Figur 1B: das Präsentationsgestell gemäss Figur 1A, in Seitenansicht;
- Figur 2A: eine Vertikalstütze *erster Variante* aus dem Gestell gemäss Figur 1A, in Perspektivansicht;
- Figur 2B: die Vertikalstütze gemäss Figur 2A, in Frontansicht;
- Figur 2C: einen vergrösserten Horizontalschnitt auf der Linie A-A in Figur 2B;

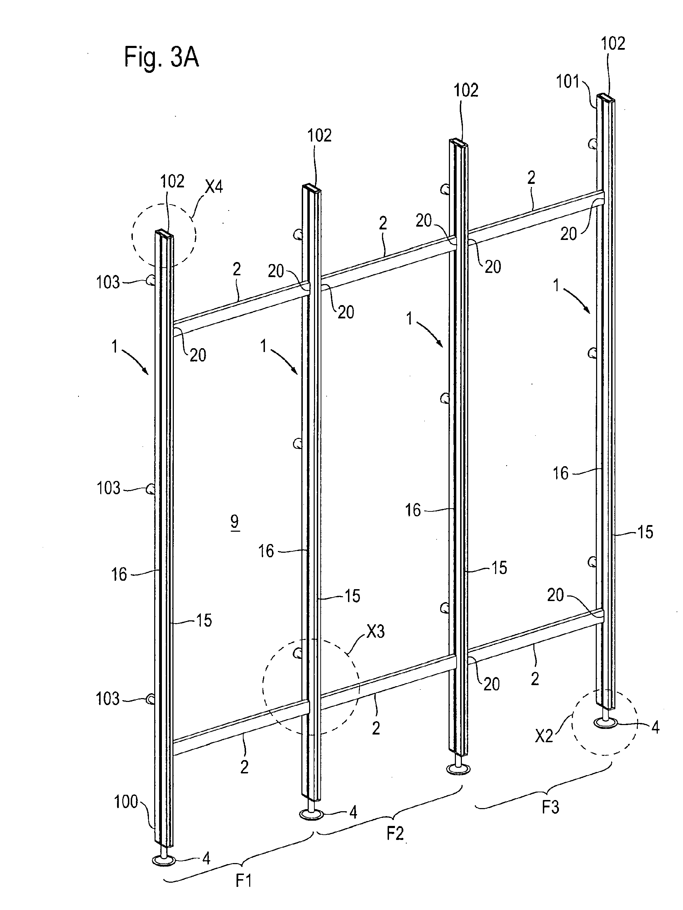

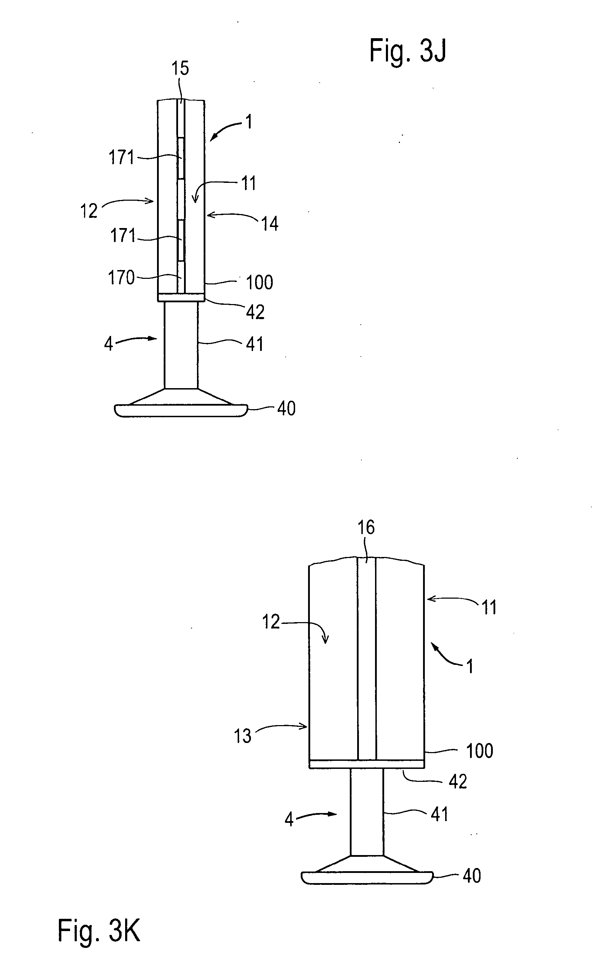

- Figur 3A: das Präsentationsgestell gemäss Figur 1A, ohne Warenträger und Füllelemente, in Perspektivansicht;

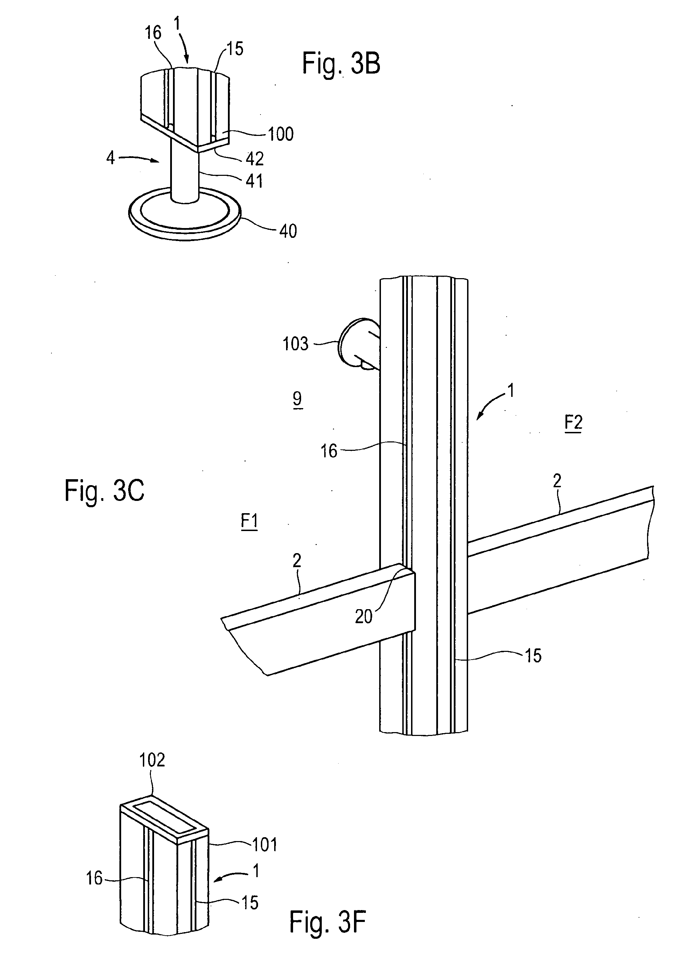

- Figur 3B: das vergrösserte Detail X2 aus Figur 3A;
- Figur 3C: das vergrösserte Detail X3 aus Figur 3A;

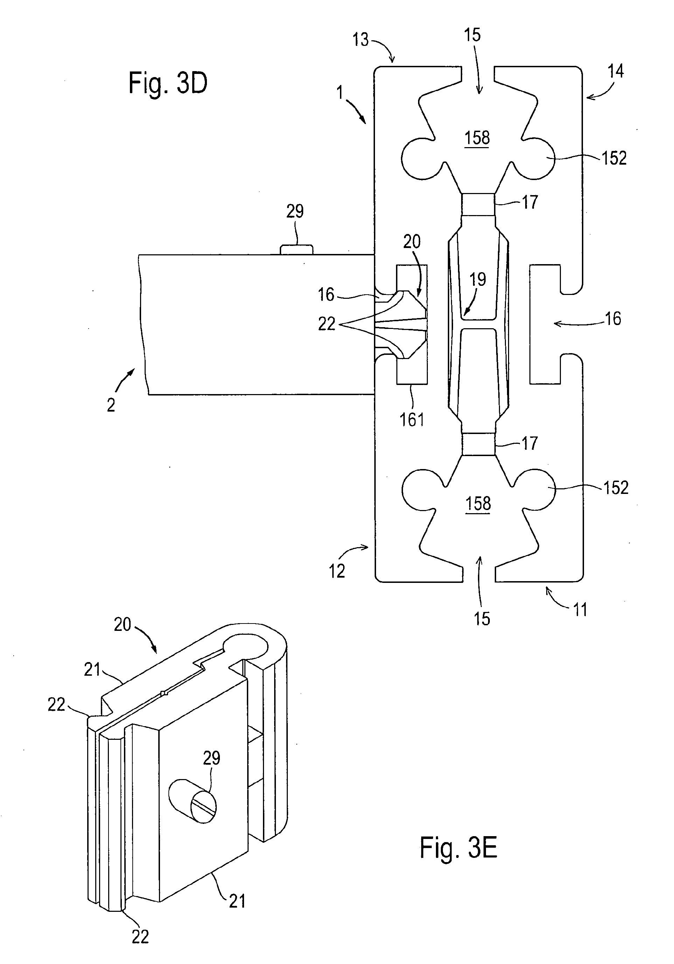

- Figur 3D: den Horizontalschnitt gemäss Figur 2C mit auf einer Seite eingesetzter Querstrebe;
- Figur 3E: ein separates Befestigungsmittel aus Figur 3D, in Perspektivansicht;
- Figur 3F: das vergrösserte Detail X4 aus Figur 3A;

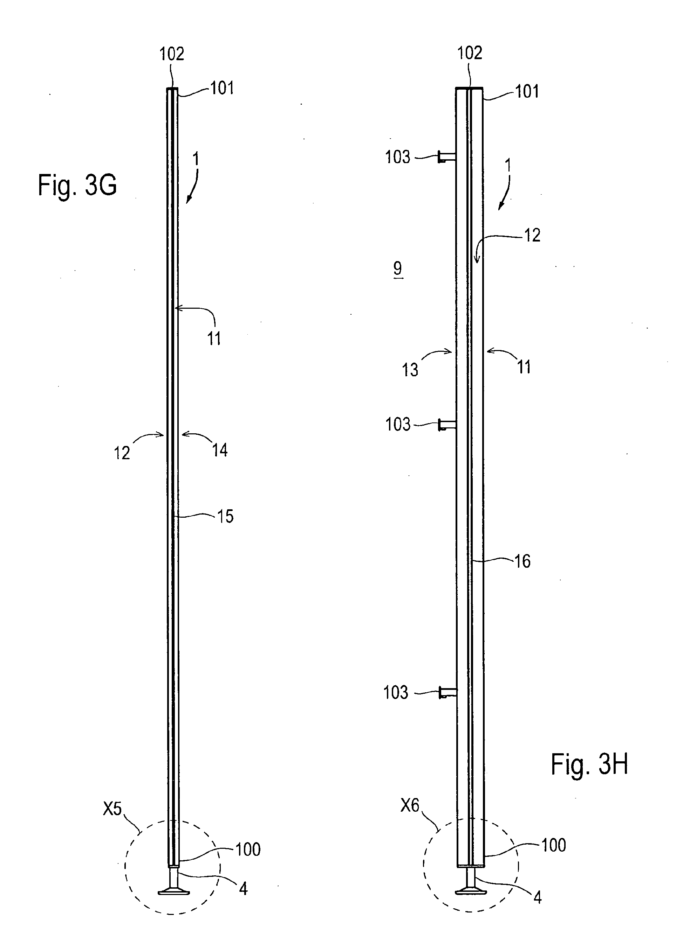

- Figur 3G: eine Vertikalstütze aus dem Gestell gemäss Figur 1A, in Frontansicht;
- Figur 3H: die Vertikalstütze gemäss Figur 3G, in Seitenansicht;
- Figur 3J: das vergrösserte Detail X5 aus Figur 3G;
- Figur 3K: das vergrösserte Detail X6 aus Figur 3H;

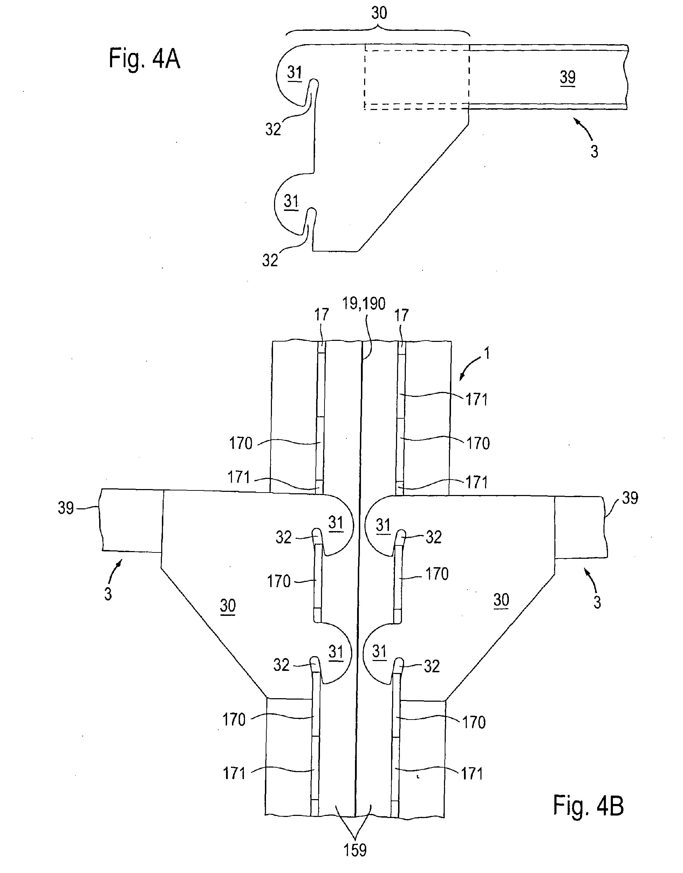

- Figur 4A: eine Konsole mit Stangenteil eines Tragarms, in Seitenansicht;
- Figur 4B: das vergrösserte Detail X1 aus Figur 1 B;

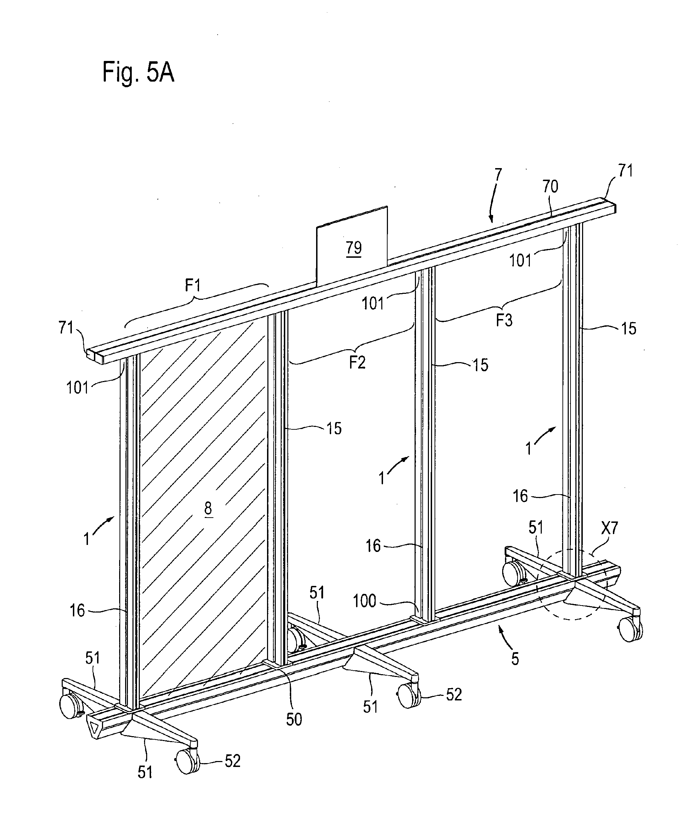

- Figur 5A: ein aus mehreren Vertikalstützen des erfindungsgemässen Profils *erster Variante* errichteten Ständer als mobiles Präsentationsgestell, in Perspektivansicht;

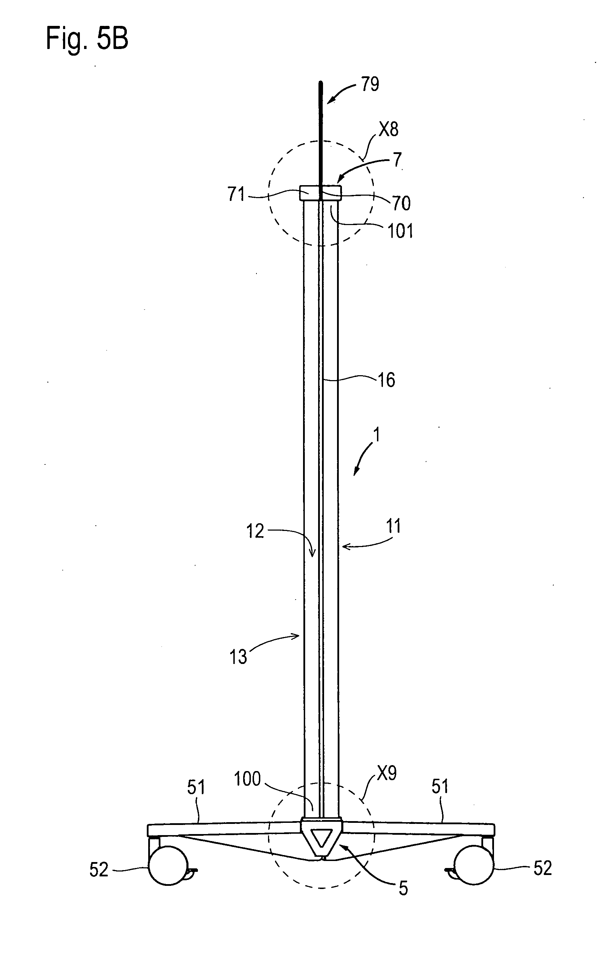

- Figur 5B: das Präsentationsgestell gemäss Figur 5A, in Seitenansicht;

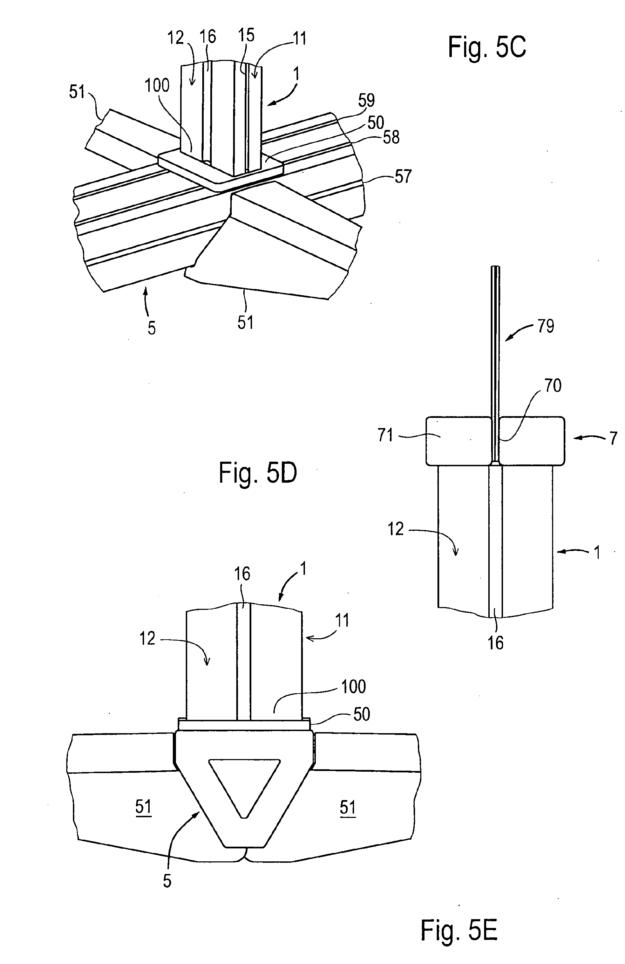

- Figur 5C: das vergrösserte Detail X7 aus Figur 5A;
- Figur 5D: das vergrösserte Detail X8 aus Figur 5B;
- Figur 5E: das vergrösserte Detail X9 aus Figur 5B;

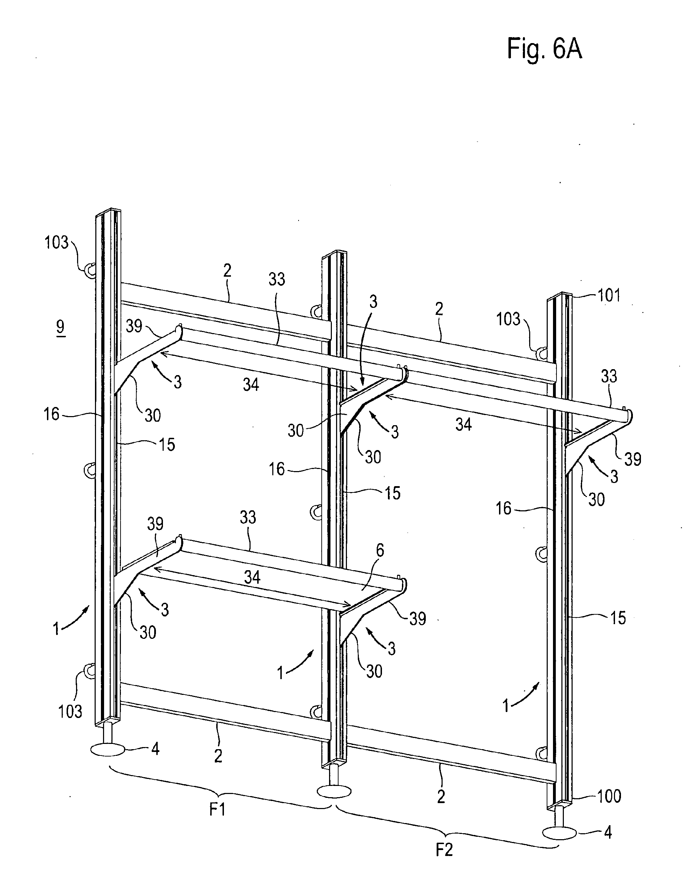

- Figur 6A: ein aus mehreren Vertikalstützen des erfindungsgemässen Profils *zweiter Variante* errichtetes stationäres Präsentationsgestell, bestückt mit verschiedenen Warenträgern, in Perspektivansicht;

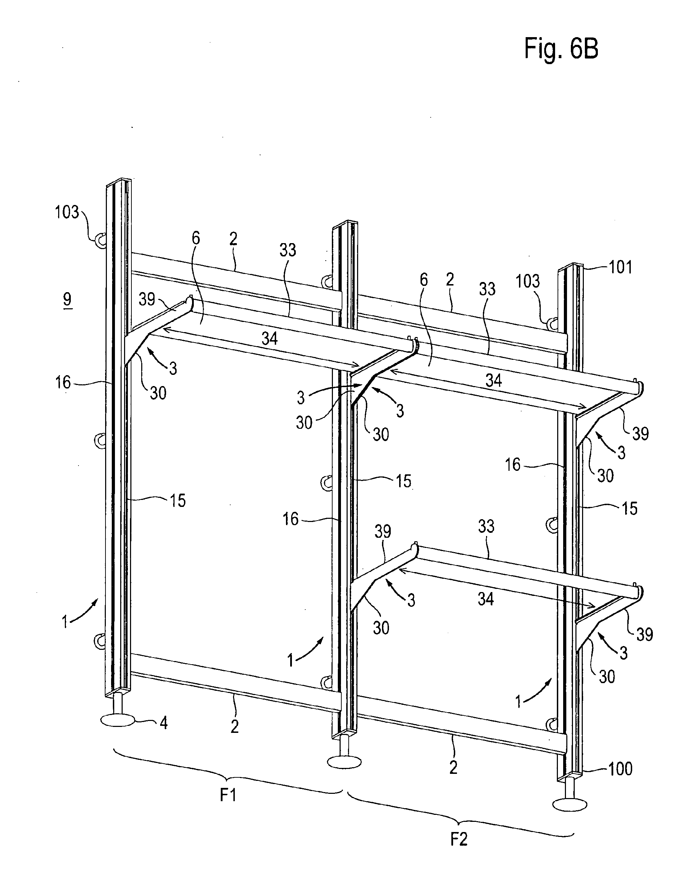

- Figur 6B: die Anordnung gemäss Figur 6A in veränderter Bestückung mit verschiedenen Warenträgern;

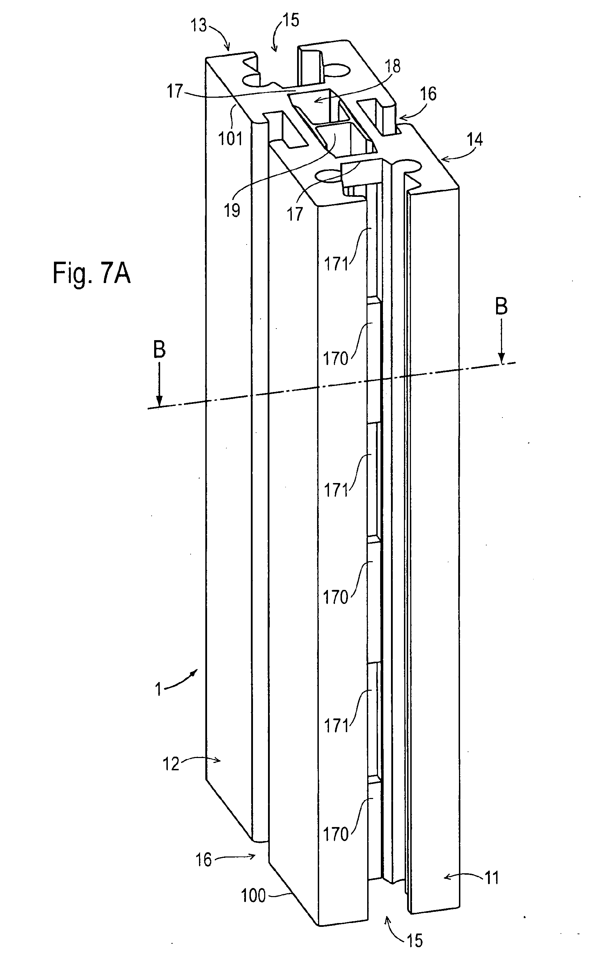

- Figur 7A: eine Vertikalstütze *zweiter Variante* aus dem Gestell gemäss Figur 6A, in Perspektivansicht;

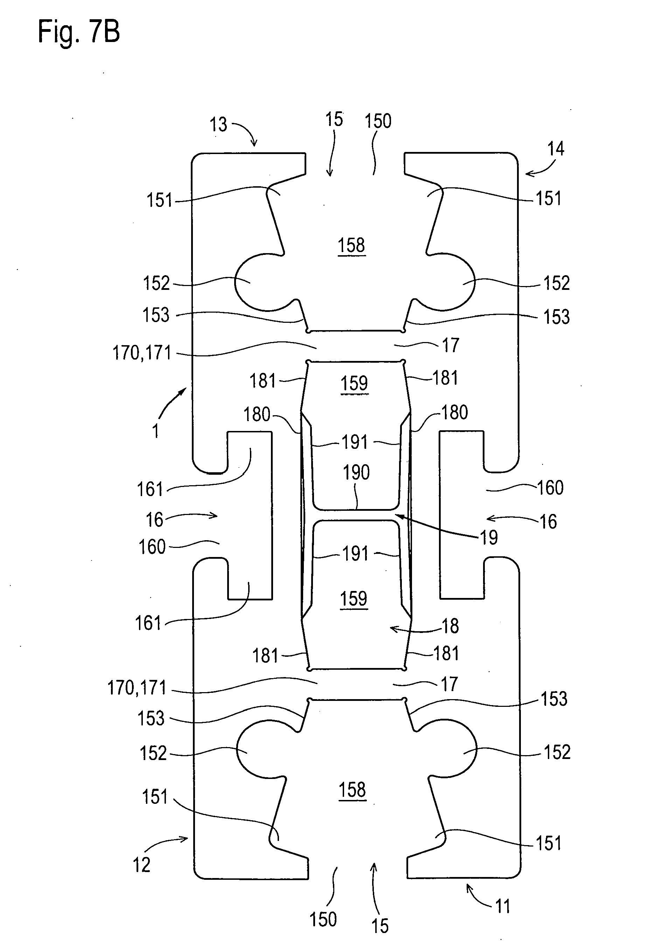

- Figur 7B: einen vergrösserten Horizontalschnitt auf der Linie B-B in Figur 7A; und

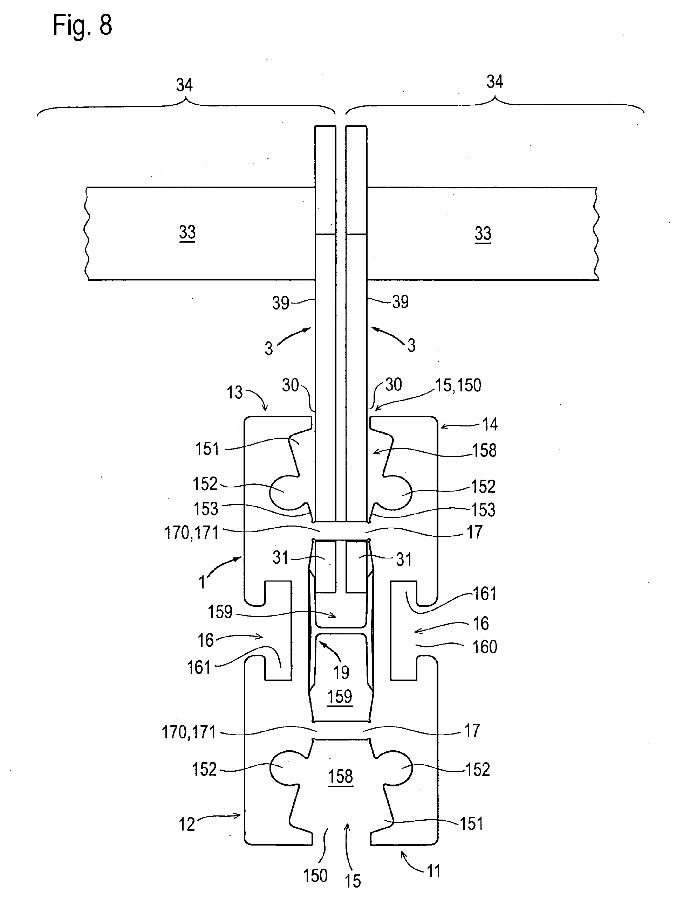

- Figur 8: die Darstellung gemäss Figur 7B mit zwei nebeneinander auf der Rückseite der Vertikalstütze *zweiter Variante* in einen Schlitz eingehängten Konsolen und von diesen getragenen Querholmen.

### Ausführungsbeispiel

Mit Bezug auf die beiliegenden Zeichnungen erfolgt nachstehend die detaillierte Beschreibung eines Ausführungsbeispiels zum erfindungsgemässen Profil sowie zweier damit errichteter Gestelle zur Warenpräsentation.

Für die gesamte weitere Beschreibung gilt folgende Festlegung. Sind in einer Figur zum Zweck zeichnerischer Eindeutigkeit Bezugsziffern enthalten, aber im unmittelbar zugehörigen Beschreibungstext nicht erläutert, so wird auf deren Erwähnung in vorangehenden oder nachfolgenden Figurenbeschreibungen Bezug genommen. Im Interesse der Übersichtlichkeit wird auf die wiederholte Bezeichnung von Bauteilen in weiteren Figuren zumeist verzichtet, sofern zeichnerisch eindeutig erkennbar ist, dass es sich um "wiederkehrende" Bauteile handelt.

### Figuren 1A, 1B, 3A bis 3C und 3F bis 3K

Das dargestellte stationäre Präsentationsgestell besteht im wesentlichen aus mehreren in einer Ebene, im Rastermass beabstandet aufgestellten Vertikalstützen **1** *erster Variante* und dazwischen eingefügten Querstreben **2.** Zwischen zwei benachbarten Vertikalstützen **1** wird jeweils ein Feld **F1,F2,F3** gebildet, das im hiesigen Beispiel von einer unteren und einer oberen Querstrebe **2** überbrückt wird. Im praktischen Einsatz können verschieden konfigurierte Tragarme **3** und Tablare **6** als Warenträger in das Gestell eingehängt werden. Die Vertikalstütze **1** ist insbesondere zur Befestigung an einer Rückwand **9** oder auf einem Balken **5** vorgesehen und weist im Prinzip einen rechtwinkligen Querschnitt auf. An der Vertikalstütze **1** werden eine erste und dritte Aussenfläche **11,13** mit einer sich darin in Längsrichtung erstreckenden Frontnut **15** sowie eine zweite und vierte Seitenfläche **12,14** mit einer sich darin in Längsrichtung erstreckenden Seitennut **16** definiert. Die Vertikalstütze **1** weist ein oberes Ende **101** und ein unteres Ende **100** auf. Auf das obere Ende **101** wird ein abschliessendes Endstück **102** aufgesetzt, während am unteren Ende **100** ein Fuss **4** gehaltert ist, der aus einem Bolzen **41** und einem Gleiter **40** besteht und mittels einer Platte **42** mit dem unteren Ende **100** verbunden ist. Zur Erzielung des vorgesehenen Abstands zwischen den Vertikalstützen **1** und der Stabilisierung des Aufbaus, ist zwischen zwei benachbarten Vertikalstützen **1,** eine obere und eine untere Querstrebe **2** mit Befestigungsmitteln **20,** die in die Seitennuten **16** eingreifen, montiert. An der dritten Aussenfläche **13** sind Halter **103** vorgesehen, die abhängig von der jeweiligen Einbausituation der Vertikalstütze **1** für eine Wandmontage genutzt werden können.

In die Frontnuten **15** können Tragarme **3** mit ihren Konsolen **30** eingehängt werden. Jeder Tragarm **3** hat eine Konsole **30,** an der ein Stangenteil **39** ansetzt, welches z.B. gerade, gestuft, schräg oder T-förmig gestaltet sein kann. Je nach Beschaffenheit der Konsolen **30** und Grösse der Tablare **6** kann ein solches von einer einzigen Konsole **30** gestützt werden oder ruht auf mehreren Konsolen **30,** die vorzugsweise auf gleicher Höhe in benachbarten Vertikalstützen **1** eingesetzt sind. Somit können sich die T-förmig angesetzten Stangenteile **39** und/oder die Tablare **6** über ein Feld **F1,F2,F3** hinaus in ein benachbartes Feld **F1,F2,F3** bzw. links oder rechts über das Gestell hinaus erstrecken.

Füllelemente **8** lassen sich zwischen zwei benachbarten Vertikalstützen **1** einfügen und verkleiden somit, je nach Grösse, anteilig die sich in den Feldern **F1,F2,F3** aufspannende Vertikalebene. Die Füllelemente **8** stecken mit ihren Seitenkanten in den Seitennuten **16** der entsprechenden zweiten und vierten Aussenfläche **12,14,** die aufeinander zugerichtet sind. Die vorzugsweise im oberen und unteren Bereich angeordneten Querstreben **2,** dienen zugleich als horizontale Auflage eingeschobener Füllelemente **8,** die Werbeangaben enthalten und/oder Dekoration sind.

### Figuren 2A bis 2C

Die Vertikalstütze **1** *erster Variante* besitzt an der ersten und dritten Aussenfläche **11,13** jeweils eine Frontnut **15** mit Zugang **150** hinter dem ein vorderer Innenraum **158** liegt. Der Innenraum **158** weist an der breitesten Stelle eine Erweiterung **151** auf, von der sich beidseits, trichterförmig eine Verengung **153** zur Wandung **17** der Vertikalstütze **1** erstreckt. Zwischen der Erweiterung **151** und der Wandung **17** weitet sich je ein kreisrunder Kanal **152** aus, die z.B. zur selbsthemmenden Aufnahme der auf die oberen Enden **101** aufgesetzten Endstücke **102** nutzbar ist. Die Wandung **17** weist ein Raster von alternierend vorhandenen Stegen **170** und Schlitzen **171** auf. Der Wandung **17** folgt ein zentrischer Innenraum **159,** der aus zwei Wandabschnitten **180** besteht, die parallel zur zweiten und vierten Aussenfläche **12,14** verlaufen und in eine Schrägfläche **181** übergehen, die in Richtung der Wandung **17** zeigt.

Im zentrischen Innenraum **159** ist eine H-förmige Profilschiene **19** eingesetzt, die mittig eine Querwandung **190** besitzt und im äusseren Bereich jeweils zwei seitlich, gegenläufig zeigende Seitenstreben **191** aufweist, die bis an die Schrägflächen **181** hin verlaufen und mit diesen formschlüssig abschliessen. Die Profilschiene **19** ist an sich verzichtbar, sie dient allein als Sichtabdeckung, da die kongruent liegenden Schlitze **171,** Durchtrittsöffnungen bilden, welche somit unterbrochen werden. Zwischen den Seitenstreben **191** und dem Wandabschnitt **180** wird beidseitig eine Aussparung **18** gebildet, die ein besseres Einführen der Profilschiene **19** in den zentrischen Innenraum **159** ermöglicht. Der Zugang **160** in die Seitennut **16** weist in Richtung des zentrischen Innenraums **159** und mündet in einen T-förmigen Innenraum **161.**

### Figuren 3D und 3E

Die Querstreben **2** beinhalten an ihren äusseren Enden jeweils ein Befestigungsmittel **20,** das im wesentlichen aus zwei scharnierartig miteinander verbundenen Backen **21** besteht. An den freien Enden weisen beide Backen **21** eine Verdickung **22** auf. Mit Hineindrehen einer Schraube **29** werden die in die Seitennut **16** eingeführten Backen **21** gespreizt, wodurch die Verdickungen **22** den Zugang **160** hintergreifen und in den Innenraum **161** bewegt werden. Somit ist die Querstrebe 2 fest mit der Vertikalstütze **1** *erster Variante* lösbar verbunden.

### Figuren 4A und 4B

Der Tragarm **3** weist an das Stangenteil **39** anschliessend eine Konsole **30** auf, die eine obere und eine untere auskragende Nase **31** hat und an der sich jeweils unterhalb ein Freischnitt **32** befindet. Die Konsole **30** wird von vorne in die Frontnut **15** eingeführt und gelangt mit der Nase **31** im Bereich der Wandung **17** hinter einen Schlitz **171** der Vertikalstütze **1** *erster Variante.* Durch nachfolgendes Absenken des Tragarms **3** übergreift der Freischnitt **32** der Konsole **30** einen Steg **170** der Vertikalstütze **1** etwa zur Hälfte, so dass der Tragarm **3** in bestimmungsgemässer Endlage fixiert ist.

### Figuren 5A bis 5E

In einer alternativen Anwendung der Vertikalstützen **1** *erster Variante* ist ein mobiler Ständer aufgebaut. Die Vertikalstützen **1** sind mit ihrem unteren Ende **100** jeweils mittels einer Adapterplatte **50** auf der Oberseite eines bodennah angeordneten Balkens 5 fixiert. Hierdurch entstehen auf allen vier Seiten umrahmte Felder **F1,F2,F3.** Zur Verbindung zwischen unterem Ende **100,** Adapterplatte **50** und Balken 5 dienen nicht dargestellte Befestigungsmittel. Hierfür kommen vorzugsweise in die erste und zweite Basisnut **58,59** eingesetzte Nutensteine sowie von unterhalb der Adapterplatte **50** in das untere Ende **100** eingreifende Schrauben und von oben mit den Nutensteinen durch die Adapterplatte **50** geführte Schrauben in Betracht. Seitlich des Balkens **5** sind paarweise gegenüberstehend Ausleger **51** angeordnet, die man jeweils an einer Seitennut **57** des Balkens **5** befestigt, z.B. ebenfalls unter Verwendung von Nutensteinen und Schrauben. An den freien Enden der Ausleger **51** sind übliche Bodenelemente **52 -** wie Rollen - angebracht. Oben auf den Vertikalstützen **1** ist vorrangig zur Stabilisierung eine überbrückende Deckleiste **7** angebracht. Die Deckleiste **7** besitzt eine mittlere, nach oben offene, längslaufende Nut **70,** um darin einen einsteckbaren Aufsatz **79** aufzunehmen. Beide Enden der Deckleiste **7** sind mit Endstücken **71** versehen.

Zwischen jeweils benachbarten Vertikalstützen **1** lassen sich tafelartige Füllelemente **8** einsetzen, die wiederum mit ihren Seitenkanten in den Seitennuten **16** der entsprechenden zweiten und vierten Aussenfläche **12,14** der beiden Vertikalstützen **1** stecken. Unten setzen die Füllelemente **8** auf der Oberseite des Balkens **5** auf, während die Oberkante der Füllelemente **8 -** wenn diese in maximaler Höhe zugeschnitten sind - von der Deckleiste **7** überspannt ist. Die Felder **F1,F2,F3** können somit anteilig oder gänzlich ausgekleidet sein.

### Figuren 6A und 6B

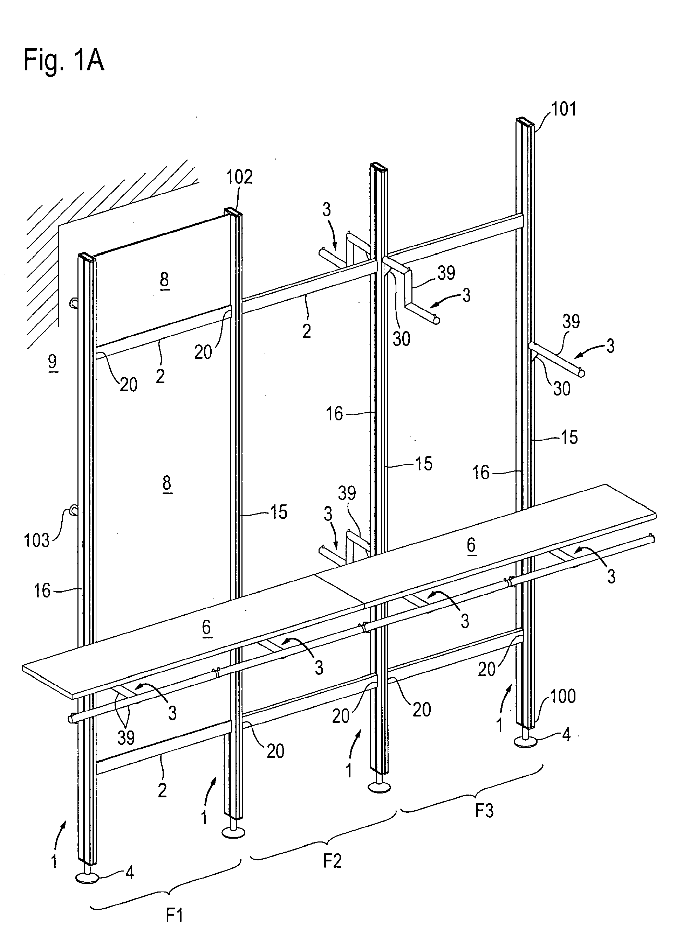

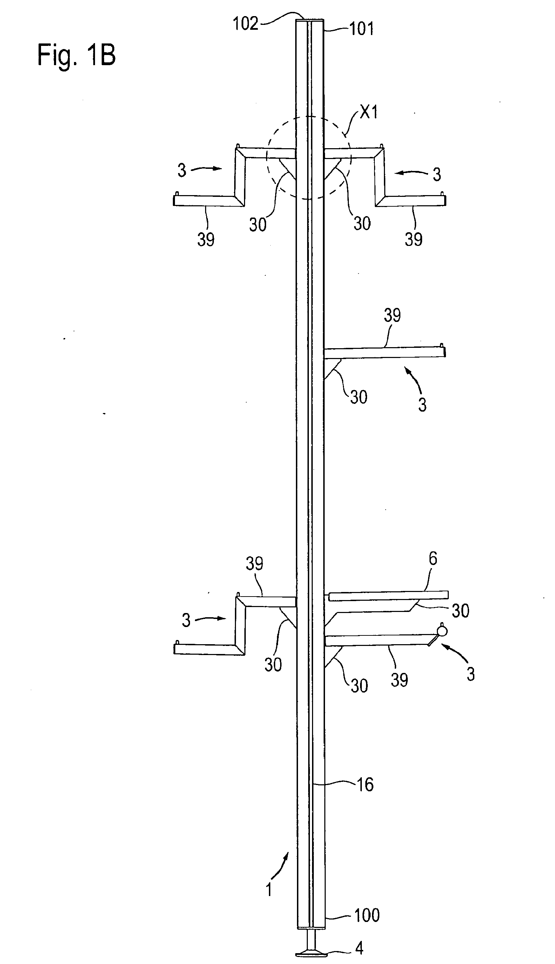

Das hier gezeigte Gestell mit zwei Feldern **F1,F2** unterscheidet sich zur Figur 1A im wesentlichen dadurch, dass nun Vertikalstützen **1** *zweiter Variante* verwendet werden, die mit verbreiterten Frontnuten **15,** erweiterten Zugängen **150** sowie verbreiterten Stegen **170** und Schlitzen **171** die Aufnahme von zwei Konsolen **30** der Tragarme **3** erlauben, die auf gleichem Höhenniveau in einen Schlitz **171** eingehängt sind. Damit lässt sich direkt neben einem Rahmen **34,** der von zwei Tragarmen **3** sowie einem diese überbrückenden Querholm **33** gebildet wird, eine weitere Konsole **30** in die Vertikalstütze **1** einhängen, welche bereits auf gleicher Höhe und gleicher Seite die erste Konsole **30** des Rahmens **34** trägt, wobei die zweite Konsole **30** dieses Rahmens **34** in einer benachbarten Vertikalstütze **1** hängt und ein erstes Feld **F1** überspannt. Die weitere Konsole **30** kann wiederum Bestandteil eines Rahmens **34** sein, der ebenfalls eine zweite Konsole **30** und einen beide Konsolen **30** verbindenden Querholm **33** hat und damit ein zweites Feld **F2** überspannt. In die von einem Rahmen **34** aufgespannte und begrenzte Horizontalfläche kann ein Tablar **6** eingesetzt sein, um darauf zu präsentierende Waren aufzulegen. Freie Querholme **33** hingegen eignen sich zum Anhängen von Waren, z.B. Oberbekleidung in sogenannter Ärmelpräsentation. In einem Gestell mit den Vertikalstützen **1** sind verschiedene Bestückungen möglich, z.B. könnte man Rahmen **34** mit oder ohne eingesetzten Tablaren **6** auf gleicher Höhe nebeneinander in benachbarten Feldern **F1,F2** oder einzeln anordnen.

Ansonsten besteht prinzipielle Übereinstimmung mit dem Gestell gemäss Figur 1A, wonach die Vertikalstützen **1** an den unteren Enden **100** mit Füssen **4** versehen sind, mit den oberen Enden **101** abschliessen, in die Seitennuten **16** die überbrückenden Querstreben **2** eingesetzt sind und das Gestell mittels Haltern **103** an einer Rückwand 9 befestigt ist. Im Gegensatz zu Figur 1A bestehen die Stangenteile **39** jetzt nicht aus Rohrstücken, sondern aus Flachmaterial, das sich quasi übergangslos von den Konsolen 30 fortsetzt.

### Figuren 7A und 7B

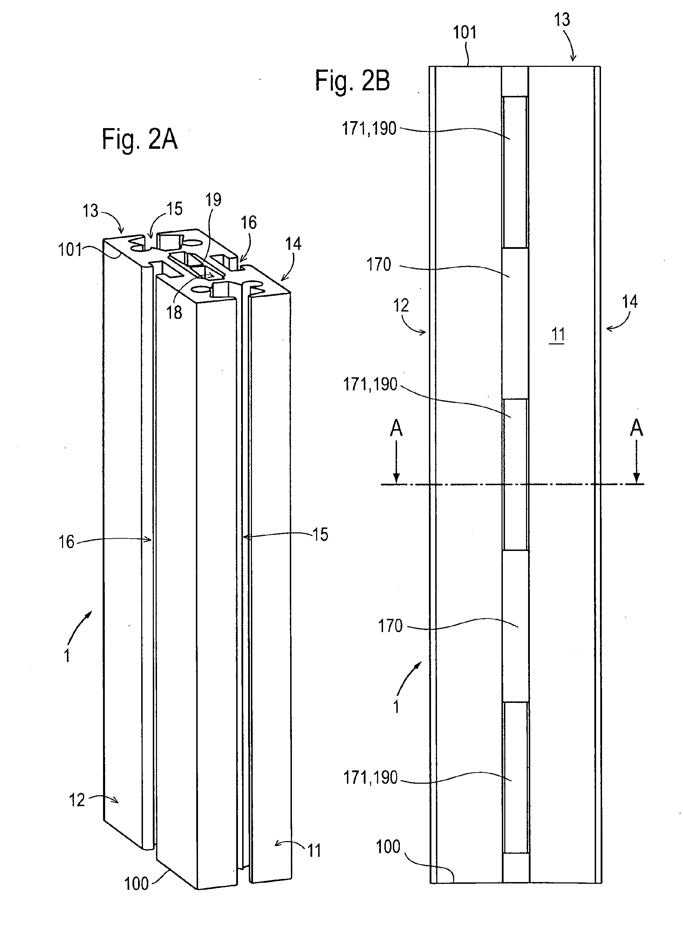

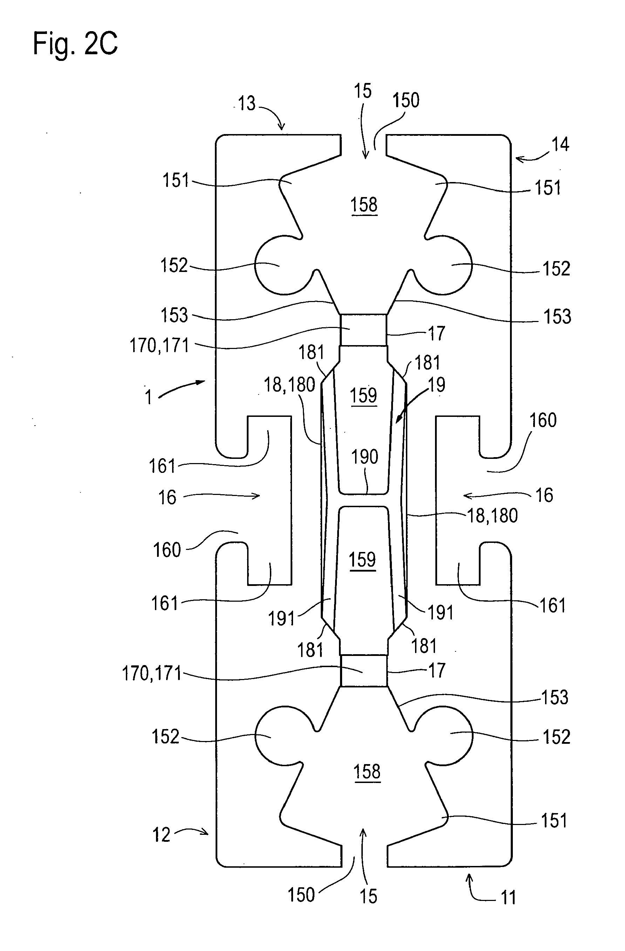

Die Vertikalstütze **1** *erster Variante* gemäss Figuren 2A bis 2C ist mit der in diesem Figurenpaar gezeigten Vertikalstütze **1** *zweiter Variante* weitgehend identisch. Zur Aufnahme von zwei nebeneinander in einem Schlitz **171** steckenden Konsolen **30** sind jedoch die beiden Frontnuten **15** mit den Zugängen **150,** die beiden Innenräume **158,** die beidseitigen Stege **170** mit den daran angrenzenden Schlitzen **171,** die beiden gegenüber liegenden zentrischen Innenräume **159** sowie die Aussparung **18** verbreitert. Zur Gewährleistung der notwendigen Festigkeit der Vertikalstütze **1** *zweiter Variante* mit adäquater Wandstärke kann es sinnvoll sein, den Querschnitt zwischen der zweiten Aussenfläche **12** und der vierten Aussenfläche **14** zu vergrössern, während das Mass zwischen der ersten Aussenfläche **11** und der dritten Aussenfläche **13** nicht verändert werden muss. Hinsichtlich der übrigen Konturen und der in die Aussparung **18** eingesetzten abschirmenden Profilschiene **19** wird auf die Beschreibung zu den Figuren 2A bis 2C Bezug genommen, wobei der Querschnitt der Profilschiene **19** der vergrösserten Aussparung **18** angepasst ist.

### Figur 8

Es sind zwei Tragarme **3** mit deren Konsolen **30** auf der Rückseite der Vertikalstütze **1,** also in die auf der dritten Aussenfläche **13** mündenden Frontnut **15,** eingehängt. Beide Tragarme **3** gehören zu jeweils einem Rahmen **34.** Die gezeigte Darstellung ergibt sich beim Horizontalschnitt durch den Steg **170** oberhalb des oberen Paars der Nasen **31** der nebeneinander hängenden Konsolen **30** mit den davon abgehenden Stangenteilen **39,** welche die Querholme **33** seitlich stützen. Der verengte Zugang **15** ist von den beiden Konsolen **30,** abgesehen von verbleibenden Luftspalten, ausgefüllt. Zwei untereinander liegende Stege **170** hängen in den Freischnitten **32,** welche an die jeweils beiden Nasen **31** jeder der zwei Konsolen **30** angrenzen, so dass ein oberes und ein unteres Paar von Nasen **31** in den hinteren zentrischen Innenraum **159** hineinragen. Auf gleiche Weise könnte die vorn auf der ersten Aussenfläche **11** mündende Frontnut 15 belegt sein. Die zwei in einer Frontnut **15** hängenden Konsolen **30** eliminieren quasi jedes Spiel, so dass die nebeneinander positionierten Rahmen **34** eine hohe Seitenstabilität aufweisen.

Hängen die beiden Konsolen **30** eines Rahmens **34** in Frontnuten **15** zweier benachbarter Vertikalstützen **1,** ohne dass zumindest eine Frontnut **15** von einer weiteren Konsole **30** belegt ist, so hat der Rahmen **34** durch seine Bügelform und die mehrfache Abstützung dennoch eine ausreichende Seitenstabilität, obwohl breitere Luftspalte in den Frontnuten **15** durch die nur anteilige Belegung verbleiben. Einen Einzelarmträger **3,** der nur zur Einhängung in eine Frontnut **15** an einer Vertikalstütze 1 vorgesehen ist (wie in Figur 1A), wird man kaum für eine Vertikalstütze **1** *zweiter Variante* wegen der Seitenlabilität verwenden. Anderenfalls wäre die Materialstärke der Konsole **30** zu verdoppeln oder in die gleiche Frontnut **15** eine weitere Konsole **30** einzuhängen, welche zu einem Einzelarmträger 3 oder einem Rahmen **34** gehört, um diese Frontnut **15** in der Breite auszufüllen.

## Patentansprüche

1. Profil **(1)** zum vertikalen Anordnen in einem Präsentationsgestell, **dadurch gekennzeichnet, dass**
a) auf zwei einander gegenüberliegenden ersten Aussenflächen **(11,13)** jeweils der Zugang **(150)** einer Frontnut **(15)** mündet, die jeweils zu einer Innenwandung **(17)** mit einem darin vorhandenen vertikalen Raster aus alternierend angeordneten Stegen **(170)** und Schlitzen **(171)** führt, in die sich herkömmliche Konsolen **(30)** von Tragarmen **(3)** einhängen lassen;
b) die beiden zueinander gegenüberliegenden Innenwandungen **(17)** zwischen sich eine vorzugsweise gemeinsame Aussparung **(18)** einschliessen, die Platz für hineinragende Nasen **(31)** auch auf gleicher Höhe in beide Frontnuten **(15)** eingehängter Konsolen **(30)** bietet; und
c) auf zwei einander gegenüberliegenden zweiten Aussenflächen **(12,14)** jeweils der Zugang **(160)** einer Seitennut **(16)** mit einem hinterschnittenen Innenraum **(161)** mündet, die zum Befestigen von Querelementen **(2,8)** in beliebiger Höhe nutzbar sind.

2. Profil **(1)** nach Anspruch 1, **dadurch gekennzeichnet, dass**
a) das Profil **(1)** ein Hohlprofil mit rechteckigem Querschnitt ist und die ersten Aussenflächen **(11,13)** mit den Frontnuten **(15)** vorzugsweise die Schmalseiten sind, während die zweiten Aussenflächen **(12,14)** mit den Seitennuten **(16)** vorzugsweise die Breitseiten sind;
b) die Seitennuten **(16)** z.B. eine T-förmige Geometrie aufweisen; und
c) die Querelemente **(2,8)** Verbindungsstreben **(2)** und/oder Flächenfüllelemente **(8)** sind, die zwischen benachbart aufgestellten Profilen **(1)** einsetzbar sind.

3. Profil **(1)** nach mindestens einem der Ansprüche 1 und 2, **dadurch gekennzeichnet, dass**
a) sich die Frontnuten **(15)** innerhalb des Profils **(1)** hinter dem Zugang **(150)** zunächst zu einem Innenraum **(158)** erweitern und vor der Innenwandung **(17)** eine Verengung **(153)** haben;
b) die Spaltbreite des Zugangs **(150)** und der Schlitze **(171)** im Verhältnis zur Plattendicke einer Konsole **(30)** so bemessen ist, dass:
ba) ein leichtgängiges Einhängen einer Konsole **(30)** in die Frontnut **(15)** und zugleich ein möglichst spielfreier Sitz erzielt wird; oder
bb) ein leichtgängiges Einhängen von zwei Konsolen **(30)** nebeneinander in eine verbreiterte Frontnut **(15)** und zugleich ein möglichst spielfreier Sitz erzielt wird;
c) die Konsolen **(30)** jeweils in ein Stangenteil **(39)** übergehen und zusammen einen Tragarm **(3)** bilden, von dem sich ein Querholm **(33)** zu einem weiteren solchen Tragarm **(3)** überbrückend erstrecken kann und somit einen Rahmen **(34)** ergibt, dessen Konsolen **(30)** zum Einhängen in benachbart aufgestellte Profile **(1)** bestimmt sind; und
d) das Profil **(1)** zumindest einen axialen Kanal **(152)** aufweist, der an den Profilenden **(100,101)** als Schraubkanal oder zur selbsthemmenden Aufnahme eines Endstücks **(102)** nutzbar ist.

4. Profil **(1)** nach mindestens einem der Ansprüche 1 bis 3, **dadurch gekennzeichnet, dass**
a) beidseits der beiden Innenräume **(158)** je ein axialer Kanal **(152)** mit Öffnung zum Innenraum **(158)** vorgesehen ist; und
b) in die Aussparung **(18)** eine Abschirmung **(19)** eingesetzt ist, um den Durchblick durch die zwei in den Innenwandungen **(17)** kongruent ausgebildeten Raster **(170,171)** zu verhindern;
c) die Abschirmung **(19)** vorzugsweise ein axial in die Aussparung **(18)** eingeschobenes Profil **(19)** von z.B. H-förmigem Querschnitt ist und aus Kunststoff mit Seitenstreben **(191)** und einer Querwandung **(190)** besteht;
d) die Seitenstreben **(191)** an den Wandflanken **(180)** der Aussparung **(18)** zu liegen kommen, während die Querwandung **(190)** die Abschirmung durchtretenden Lichts bewirkt; und
e) durch die Abschirmung **(19)** von der Aussparung **(18)** ein zweigeteilter zentrischer Innenraum **(159)** ausreichender Grösse für die Aufnahme der hineinragenden Nasen **(31)** eingehängter Konsolen **(30)** verbleibt.

5. Profil **(1)** nach mindestens einem der Ansprüche 1 bis 4, **dadurch gekennzeichnet, dass**
a) das Profil **(1)** im Aluminium-Strangguss hergestellt ist; und
b) die nach aussen Licht reflektierenden Flächen innerhalb der Innenräume **(158)** mit einem Licht absorbierenden Mittel, z.B. einem Farbauftrag, versehen sind.

6. Gestell zur Warenpräsentation mit dem Profil **(1)** nach mindestens einem der Ansprüche 1 bis 5, **dadurch gekennzeichnet, dass**
a) zwei oder mehr Vertikalstützen aus dem Profil **(1)** zueinander beabstandet, vorzugsweise in einer vertikalen Ebene, aufgestellt sind, wobei Frontnuten **(15)** in den Raum gerichtet sind;
b) die Vertikalstützen aus dem Profil **(1)** mittels Haltern **(103)** an einer rückseitigen Tragstruktur **(9),** z.B. einer Rückwand, befestigt sind;
c) zwischen benachbart stehende Vertikalstützen **(1)** das Gestell stabilisierende Verbindungsstreben **(2)** aufweist, die in Seitennuten **(16)** lösbar befestigt sind;
d) zwischen benachbart stehende Vertikalstützen aus dem Profil **(1)** Flächenfüllelemente **(8)** zur Hintergrundabdeckung und/oder Dekoration und/oder Werbung in zueinander gewandte Seitennuten **(16)** eingeschoben werden können; und
e) die in Raum zugänglichen Frontnuten **(15)** entsprechend der Aufgabe des Gestells mit Konsolen **(30)** bestückt sind, die zu verschiedenen konfigurierten Tragarmen **(3)** gehören, welche direkt als solche nutzbar sind oder Ablagen (6) stützen.

7. Gestell nach Anspruch 6, **dadurch gekennzeichnet, dass** die Verbindungsstreben **(2)** an ihren Enden auf Klemmung beruhende Befestigungsmittel **(20)** haben, die sich in die Seitennuten **(16)** eingreifend an beliebiger Höhenposition lösbar arretieren lassen.

8. Gestell zur Warenpräsentation mit dem Profil **(1)** nach mindestens einem der Ansprüche 1 bis 5, **dadurch gekennzeichnet, dass**
a) zwei oder mehr Vertikalstützen aus dem Profil **(1)** zueinander beabstandet, in einer vertikalen Ebene, mit ihren unteren Enden **(100)** auf der Oberseite eines Balkens **(5)** mit Frontnuten **(15)** in den Raum gerichtet, fixiert sind;
b) seitlich des Balkens **(5)** paarweise gegenüberstehend Ausleger **(51)** angeordnet sind, die als Bodenelemente **(52),** z.B. Rollen, haben;
c) die vom Raum zugänglichen Frontnuten **(15)** entsprechend der Aufgabe des Gestells mit Konsolen **(30)** bestückt sind, die zu verschiedenen konfigurierten Tragarmen **(3)** gehören, welche direkt als solche nutzbar sind oder Ablagen **(6)** stützen; und
d) zwischen benachbart stehende Vertikalstützen aus dem Profil **(1)** Flächenfüllelemente **(8)** zur Auskleidung, Hintergrundabdeckung und/oder Dekoration und/oder Werbung in zueinander gewandte Seitennuten **(16)** eingeschoben werden können.

9. Gestell nach Anspruch 8, **dadurch gekennzeichnet, dass**
a) der Balken **(5)** auf seiner Oberseite zwei langlaufende Basisnuten **(58,59),** an den Flanken jeweils eine Seitennut **(59)** und an der Unterseite eine Bodennut aufweist;
b) zur Verbindung zwischen den unteren Enden **(100)** der Vertikalstützen aus dem Profil **(1)** und dem Balken **(5)** jeweils eine Adapterplatte **(50),** mit Befestigungsmitteln einerseits mit dem unteren Stützenende **(100)** und andererseits mit der Balkenoberseite verbunden ist;
c) als Befestigungsmittel dienen in die Basisnuten **(58,59)** eingesetzte Nutensteine, von unterhalb der Adapterplatte **(50)** in die Kanäle **(152)** des unteren Stützenendes **(100)** eingreifende Schrauben und von oben durch die Adapterplatte **(50)** in die Nutensteine eingreifende Schrauben; und
d) die Ausleger **(51)** jeweils an einer Seitennut **(57)** des Balkens **(5)** befestigt sind, z.B. ebenfalls unter Verwendung von Nutensteinen und Schrauben.

10. Gestell nach zumindest einem der Ansprüche 8 und 9, **dadurch gekennzeichnet, dass**
a) zwischen benachbart stehende Vertikalstützen aus dem Profil **(1)** das Gestell stabilisierende Verbindungsstreben **(2)** aufweist, die in Seitennuten **(16)** lösbar befestigt sind; und/oder
b) oben auf den Vertikalstützen aus dem Profil **(1)** eine überbrückende Deckleiste **(7)** angebracht ist, die eine mittlere, nach oben offene, längslaufende Nut **(70)** besitzt, um darin einen einsteckbaren Aufsatz **(79)** aufzunehmen; und
c) die Verbindungsstreben **(2)** an ihren Enden auf Klemmung beruhende Befestigungsmittel **(20)** haben, die sich in die Seitennuten **(16)** eingreifend an beliebiger Höhenposition lösbar arretieren lassen.
